# FASCICULE DE BREVET EUROPEEN

(11) **EP 2 242 354 B1**
(45) Date de publication et mention de la délivrance du brevet: **17.08.2011**
(21) Numéro de dépôt: 09720533.0
(22) Date de dépôt: 29.01.2009
(51) Int. Cl.: A01G 17/08

(54) **Machine pour palisser la vegetation, notamment les branches de vignes**
Maschine zum Schnüren von Pflanzen, insbesondere für Weinreben
Machine for tying plants, in particular the branches of vines

(30) Priorité: 12.02.2008 FR 0800731
(43) Date de publication de la demande: 27.10.2010
(73) Titulaire: Schimitt, Modeste, 68250 Pfaffenheim (FR)
(72) Inventeur: Schimitt, Modeste, 68250 Pfaffenheim (FR)
(74) Mandataire: Nithardt, Roland
(86) Numéro de dépôt international: PCT/FR2009/000100
(87) Numéro de publication internationale: WO 2009/112699

(56) Documents cités:
- FR-A- 2 723 289

## Description

### Domaine technique:

La présente invention concerne une machine pour palisser la végétation, notamment les branches des vignes, des framboisiers ou similaires, comportant des moyens de relevage des branches, des moyens d'alimentation de fils de palissage et des moyens de liage desdits fils de palissage, ces moyens de liage comportant deux bras pivotants montés autour d'axes sensiblement verticaux, ces bras étant couplés à des moyens d'entraînement pour être déplacés d'une position d'attente dans laquelle leurs extrémités au moins sont écartées dans une position de travail dans laquelle lesdites extrémités sont rapprochées et agencées pour poser une agrafe sur les fils de palissage.

### Technique antérieure :

La technique de palissage la plus répandue est manuelle et nécessite un travail fastidieux de relevage manuel de la végétation, de pose des fils de palissage de part et d'autre de la végétation et d'agrafage ou de liage par tout moyen connu des fils de palissage entre eux à intervalles réguliers ou non. Certaines machines ont été développées pour effectuer ce travail mécaniquement. Néanmoins, les moyens de relevage mécaniques utilisés sont relativement agressifs avec la végétation, comme par exemple les vis sans fin qui peuvent arracher certaines branches. La machine décrite dans la publication FR 2 723 289 a l'avantage d'utiliser des bandes sans fin en caoutchouc inclinées et tendues entre deux rouleaux dont l'un est entraîné en rotation. Lorsque ces bandes sans fin sont entraînées, elles sont agencées pour donner un effet de vrille à la végétation permettant de remonter naturellement les branches sans les casser. Cette machine comporte un magasin d'agrafes, fixe, logé dans le châssis de la machine, et deux bras pivotant autour d'axes verticaux, l'un des bras étant équipé d'une tête de préhension apte à saisir une agrafe dans le magasin lorsque le bras pivote et que sa tête affleure le magasin. Ce mécanisme d'agrafage est délicat et complexe à mettre en oeuvre puisqu'il nécessite un réglage précis de la position de la tête de préhension par rapport au magasin pour garantir la saisie correcte de l'agrafage, cette position étant susceptible de se dérégler dans le temps, notamment sous l'effet de vibrations du tracteur qui porte la machine. Ainsi, l'opération d'agrafage n'est pas garantie, rendant cette machine non fiable, et non satisfaisante.

### Exposé de l'invention:

La présente invention vise à résoudre ces problèmes en proposant une machine de palissage dont les moyens de liage sont simples et rapides à mettre en oeuvre, fiables et garantissent un agrafage correct et régulier.

Dans ce but, l'invention concerne une machine du genre indiqué en préambule, caractérisée en ce qu'un des bras comporte un magasin d'agrafes embarqué, disposé dans le prolongement d'une tête d'agrafage, et en ce que l'autre bras comporte une tête d'insertion agencée pour coopérer avec ladite tête d'agrafage quand les bras sont en position de travail pour poser ladite agrafe sur les fils de palissage.

Ainsi, le magasin d'agrafes est intégré dans le bras d'agrafage, ce qui permet d'assurer un alignement précis, correct et indéréglable entre les agrafes stockées dans ce magasin et la tête d'agrafage.

Dans une forme de réalisation préférée, la tête d'agrafage comporte une zone de réception d'une agrafe en communication avec le magasin d'agrafes, suivie d'une zone de pose de l'agrafe, et un couteau aligné avec lesdites zones, ce couteau étant couplé à un mécanisme d'actionnement pour être déplacé entre une position passive dans laquelle il est en amont de la zone de réception pour être disposé à l'arrière de l'agrafe, et une position active dans laquelle il est au moins partiellement dans la zone de réception et pour déplacer l'agrafe de la zone de réception à la zone de pose.

De manière tout à fait avantageuse, le mécanisme d'actionnement est actionné par le déplacement du bras d'agrafage:

Dans ce but, le mécanisme d'actionnement comporte une crémaillère solidaire du couteau, engrenant un pignon, et une tige d'actionnement liée à l'une de ses extrémités au pignon en un point excentré par rapport à l'axe de rotation du pignon, et à l'autre extrémité en un point fixe distinct de l'axe de pivotement du bras, de sorte que le pivotement du bras génère le déplacement du couteau.

Les bras peuvent avantageusement comporter des guides fils agencés pour guider et positionner les fils de palissage par rapport aux têtes d'agrafage et d'insertion.

Dans la forme de réalisation préférée, le magasin d'agrafes comporte des moyens de poussée des agrafes en direction de la zone de réception, ces moyens de poussée étant agencés pour appliquer sur les agrafes une force de poussée sensiblement constante.

Ces moyens de poussée comportent avantageusement un poussoir logé dans le magasin à l'arrière des agrafes et un système de mouflage par poulies et câble, une extrémité du câble étant liée au poussoir et l'autre extrémité du câble portant un contrepoids.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1 est une vue de face de la machine selon l'invention,
- la figure 2 est une vue de côté de la machine de la figure 1,
- la figure 3 est une vue de dessus des bras d'agrafage, en position de repos et en position de travail,
- la figure 4 est une vue en perspective montrant l'extrémité des bras d'agrafage en phase d'agrafage,
- les figures 5A et 5B représentent deux types d'agrafe utilisables dans la machine de l'invention,
- la figure 6 est une vue en perspective de la tête du bras d'agrafage,
- la figure 7 est une vue de dessus de la tête de la figure 6,
- la figure 8 est une vue du magasin d'agrafes et de son système d'avance, et
- la figure 9 est une vue agrandie du détail IX de la figure 8.

### Illustrations de l'invention et meilleure manière de la réaliser :

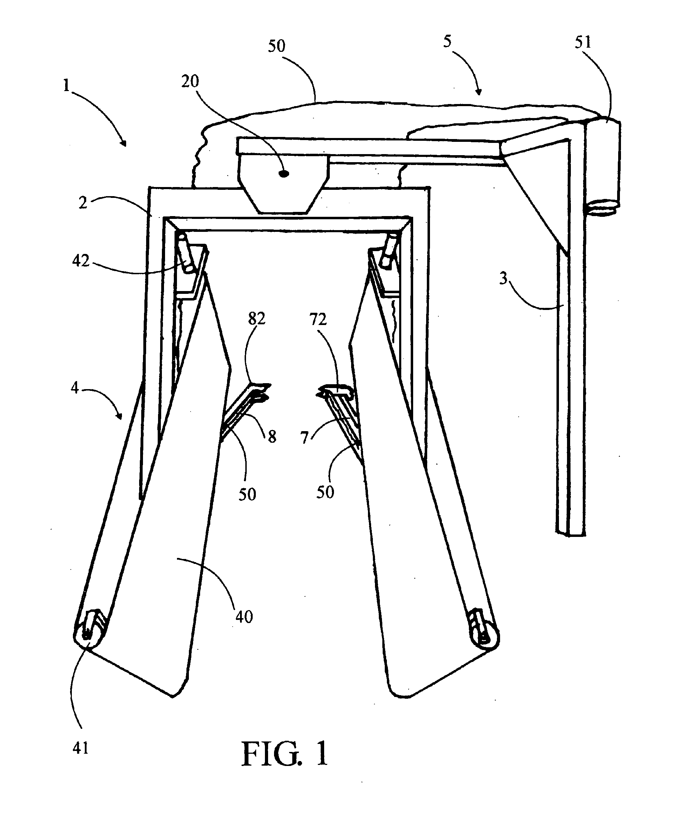

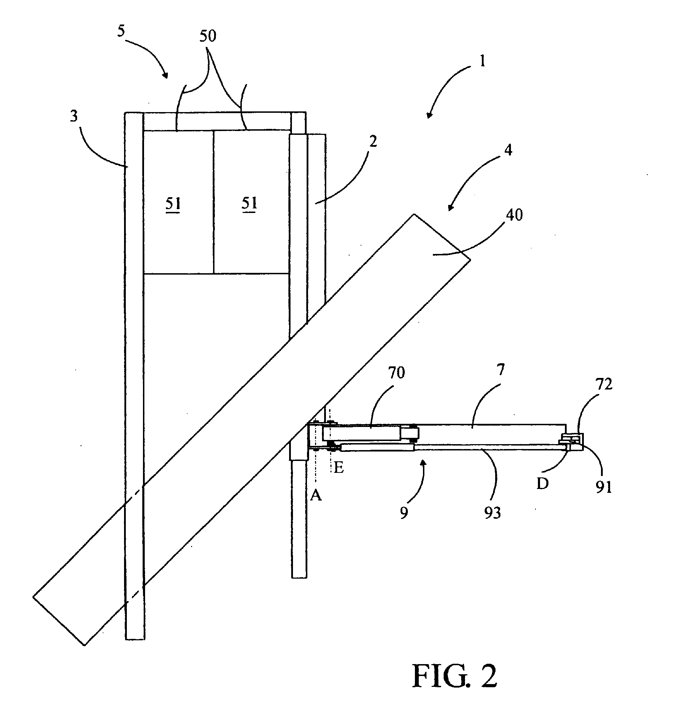

En référence aux figures 1 et 2, la machine de palissage 1 selon l'invention est destinée à palisser la végétation, notamment les branches des vignes, des framboisiers ou similaires. Elle comporte un portique 2 en forme de U inversé apte à enjamber une rangée de végétation, ce portique 2 étant suspendu par une articulation 20 à une potence 3 pour disposer d'une certaine liberté de mouvement lui permettant de suivre la rangée de végétation. Les jambes du portique 2 peuvent être fixes, comme sur l'exemple représenté, ou mobiles par rapport à la poutre supérieure sur des chariots (non représentés) pour pouvoir ajuster leur écartement et s'adapter à la largeur d'une rangée de végétation. La potence 3 est agencée pour être montée sur un engin agricole, un tracteur ou similaire (non représenté). Cette machine 1 pourrait être aussi intégrée dans un engin agricole, dédié uniquement à cette fonction de palissage. Tout autre mode de construction du portique 2 et de la potence 3 est bien entendu possible. Cette machine 1 comporte des moyens de relevage 4 des branches, des moyens d'alimentation 5 de fils de palissage 50 et des moyens de liage 6 de ces fils de palissage 50 à intervalles déterminés généralement par l'opérateur.

Dans l'exemple représenté, les moyens de relevage 4 comportent deux bandes sans fin 40, réalisée dans une matière souple et adhérente comme le caoutchouc ou similaire, et dont la surface peut ou non être structurée par des rainures, des picots ou similaires. Ces bandes sans fin 40 sont montées autour de deux rouleaux 41, dont un est entraîné en rotation par un moteur 42 ou équivalent. La vitesse d'entraînement des bandes sans fin 40 est proportionnelle à la vitesse d'avance du tracteur. Elles définissent entre elles un espace ouvert en V pour faciliter la pénétration de la végétation, ont une orientation inclinée du bas vers le haut et sont chacune légèrement vrillées de l'extérieur vers l'intérieur, par rapport au sens inverse de déplacement du tracteur. Tout autre moyen de relevage est envisageable. L'avantage des bandes sans fin 40 est qu'elles permettent de relever la végétation en douceur, sans provoquer de dégâts importants.

Au fur et à mesure de l'avance du tracteur, des fils de palissage 50, ficelles, rubans ou similaires, sont dévidés des moyens d'alimentation 5 pour être tendus de part et d'autre de la végétation, puis reliés entre eux à intervalles réguliers ou non par les moyens de liage 6 de façon à maintenir la végétation en position verticale. Les moyens d'alimentation 5 comportent dans l'exemple représenté au moins deux bobines de fil 51 montées sur la potence 3 ou à tout autre endroit de la machine 1, et aptes à délivrer chacune au moins un fil de palissage 50, par exemple en polypropylène ou similaire. On peut bien entendu prévoir des moyens d'alimentation 5 différents, l'essentiel étant qu'ils permettent le dévidage automatique des fils de palissage par traction lors de l'avance du tracteur.

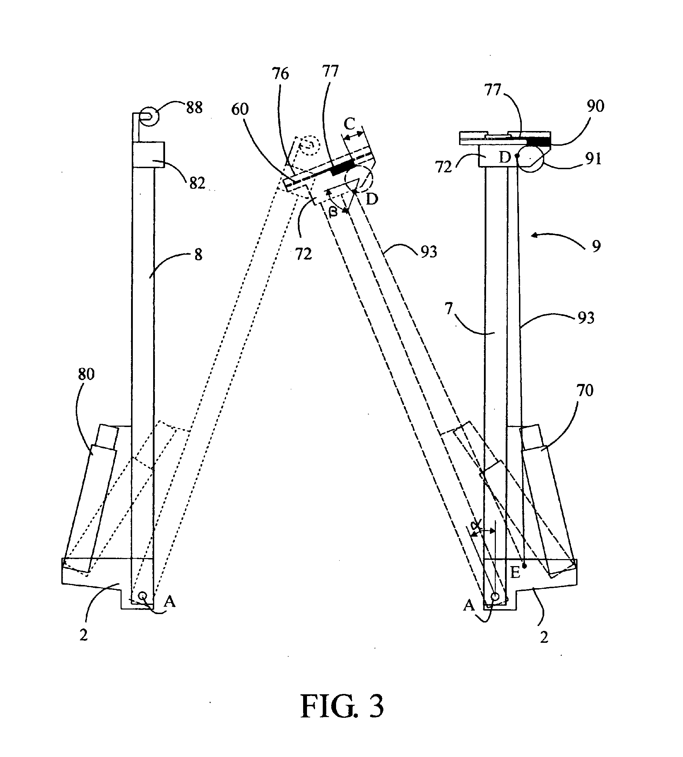

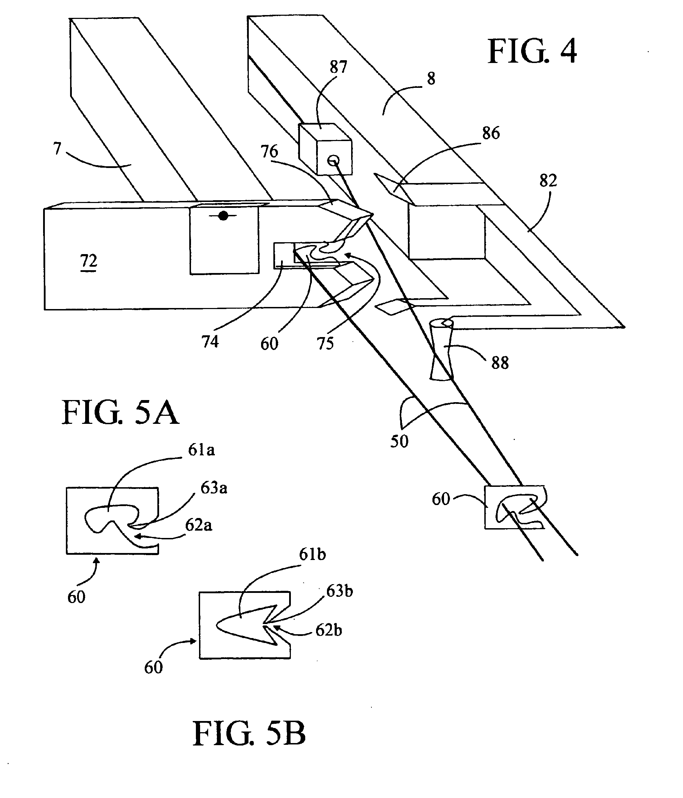

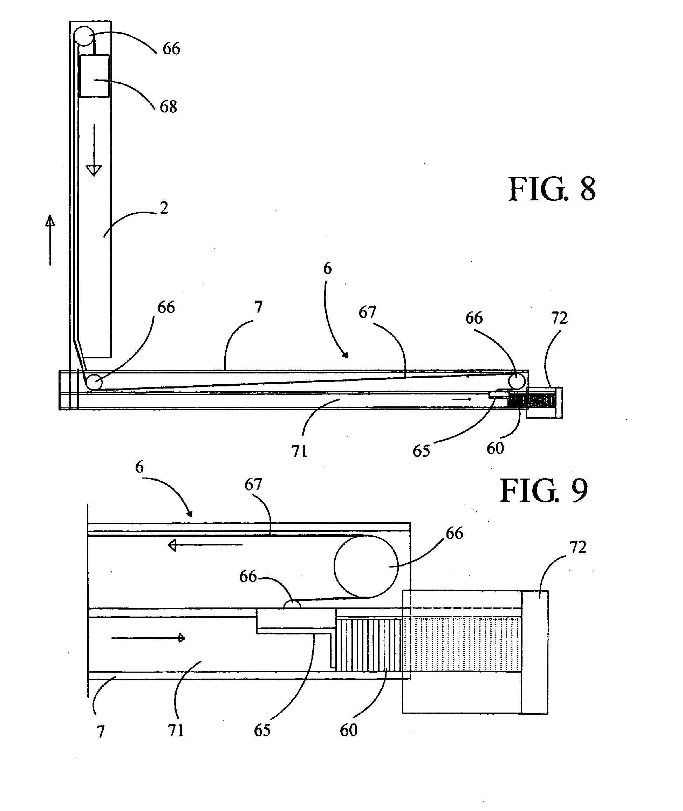

Les moyens de liage 6 comportent deux bras 7, 8 pivotants montés sur le portique 2 autour d'axes A sensiblement verticaux. Ils s'étendent vers l'arrière de la machine 1 et sont couplés à des moyens d'entraînement 70, 80 pour être déplacés d'une position d'attente, illustrée en traits pleins à la figure 3, dans laquelle leur extrémités sont écartées, à une position de travail, illustrée en traits interrompus à la figure 3, dans laquelle leur extrémités sont rapprochées et agencées pour poser une agrafe 60 sur les fils de palissage 50. Dans l'exemple représenté, les moyens d'entraînement sont constitués par des vérins 70, 80, par exemple hydrauliques, mais peuvent comporter tout autre actionneur équivalent. Une des extrémités du vérin 70, 80 est fixée au portique 2 et l'autre extrémité au bras 7, 8 de sorte à pivoter le vérin 70, 80 autour de son axe A. Un des bras 7 comporte un magasin d'agrafes 71 embarqué (cf. fig. 8, 9), disposé dans le prolongement d'une tête d'agrafage 72, tandis que l'autre bras 8 comporte une tête d'insertion 82 agencée pour coopérer avec la tête d'agrafage 72 quand les bras 7 et 8 sont en position de travail pour poser l'agrafe 60 sur les fils de palissage 50 (cf. fig.4).

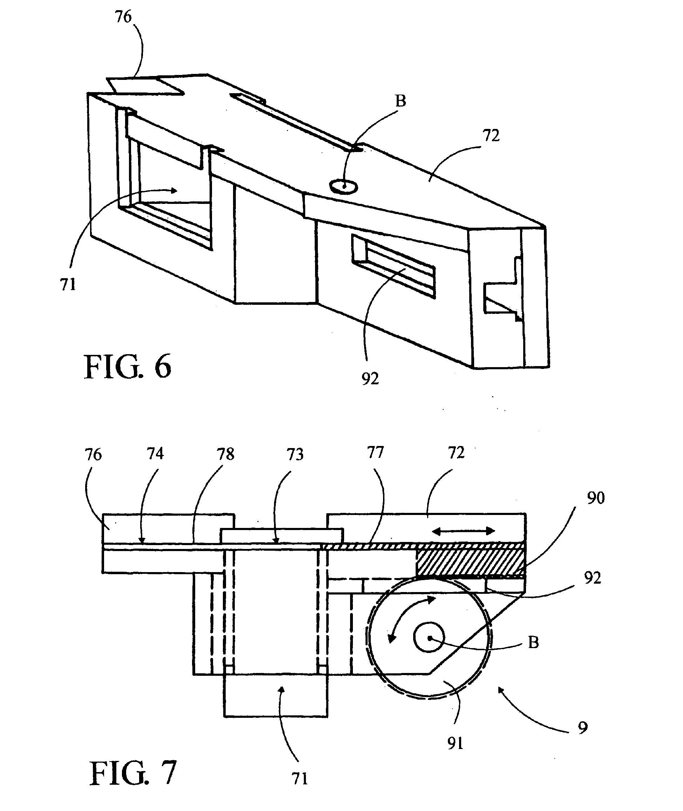

En référence aux figures 6 à 9, la tête d'agrafage 72 comporte une zone de réception 73 d'une agrafe 60 qui communique avec le magasin d'agrafes 71, formé d'un rail et contenant une barrette d'agrafes 60 guidée en translation dans ce rail. En référence aux figures 5A et 5B, les agrafes 60 présentent une forme extérieure parallélépipédique complémentaire à la section du magasin 71, et un logement intérieur 61a, 61b pourvu d'une ouverture latérale 62a, 62b pour l'introduction des fils de palissage 50 et d'un cran d'arrêt 63a, 63b orienté vers l'intérieur pour empêcher la sortie de ces fils dudit logement. Bien entendu, toute autre forme d'agrafe équivalente peut convenir. Les agrafes 60 sont de préférence réalisées en matériau synthétique photodégradable, assemblées en barrette par des petits picots de liaison sécables, étant précisé que toute autre matière peut également convenir.

La tête d'agrafage 72 comporte une zone de pose 74 de l'agrafe 60 disposée dans le prolongement de la zone de réception 73, cette zone de pose 74 comportant une ouverture 75 pour permettre l'introduction des fils de palissage 50 dans le logement 61a, 61b de l'agrafe 60. Cette ouverture 75 est disposée en regard de la tête d'insertion 82 de l'autre bras 8. La tête d'agrafage 72 comporte une extrémité 76 biseautée ou chanfreinée apte à coopérer avec l'extrémité 86 biseautée ou chanfreinée complémentaire de la tête d'insertion 82, tel que schématisé sur la figure 4, pour faciliter leur chevauchement et l'introduction du fil de palissage 50 guidé par le bras 8 dans ladite agrafe 60. A cet effet, les bras 7, 8 portent des guides fils 87, 87 pourvus ou non de tendeurs disposés sur le parcours des fils de palissage 50 pour maîtriser leur guidage et leur tension.

La tête d'agrafe 72 comporte également un couteau 77 ou poussoir, aligné avec les zones de réception 73 et de pose 74, ce couteau 77 étant couplé à un mécanisme d'actionnement 9 pour être déplacé entre une position passive dans laquelle il est disposé en amont de la zone de réception 73 (cf. fig. 7, et fig. 3 - position d'attente du bras 7) pour être à l'arrière de l'agrafe 60 contenue dans cette zone de réception 73, et une position active dans laquelle il est au moins partiellement dans la zone de réception 73 (cf. fig. 3 - position de travail du bras 7) et a déplacé l'agrafe 60 de la zone de réception 73 à la zone de pose 74. A cet effet, la tête d'agrafage 72 comporte des rainures intérieures 78 permettant le guidage en translation du couteau 77 et de l'agrafe 60.

Dans l'exemple représenté à la figure 3, le mécanisme d'actionnement 9 est actionné grâce au déplacement du bras 7 par son vérin 70. Ce mécanisme d'actionnement 9 comporte une crémaillère 90 solidaire du couteau 77, engrenant un pignon 91 monté mobile en rotation dans la tête d'agrafage 72 autour d'un axe de rotation B, ce pignon 91 communiquant avec la crémaillère 90 au travers d'une fenêtre 92 ménagée dans la tête d'agrafage 72. Ce mécanisme d'actionnement 9 comporte également une tige d'actionnement 93 de longueur fixe, liée à l'une de ses extrémités au pignon 91 en un point D excentré par rapport à l'axe de rotation B du pignon 91, et à l'autre extrémité en un point fixe E distinct de l'axe de pivotement A du bras 7, de sorte que le pivotement du bras 7 d'un angle α (alpha) génère la rotation du pignon 91 d'un angle β (béta) qui entraîne le déplacement en translation du couteau 77 d'une course C. Ce mouvement est totalement réversible. Les bras comportent des guides fils agencés pour guider et positionner les fils de palissage par rapport auxdites têtes d'agrafage et d'insertion.

Le magasin d'agrafes 71 comporte des moyens de poussée 6 de la barrette d'agrafes 60 en direction de la zone de réception 73, qui peuvent se présenter sous différentes formes. Compte tenu de la longueur du magasin 71 et donc de la course que doivent parcourir ces moyens de poussée 6, une des solutions consiste à utiliser une technique du mouflage combinée à un contrepoids, qui a l'avantage d'appliquer sur la barrette d'agrafes 60 une force de poussée constante quelque soit la longueur de la barrette. En référence plus particulièrement aux figures 8 et 9, ces moyens de poussée 6 comportent un poussoir 65 logé dans le magasin 71 à l'arrière de la barrette d'agrafes 60 et un système de mouflage par poulies 66 et câble 67, une extrémité du câble 67 étant liée au poussoir 65 et l'autre extrémité du câble portant un contrepoids 68 logé dans un des montants du portique 2. Bien entendu tout autre moyen de poussée peut aussi convenir.

Il ressort clairement de cette description que l'invention permet d'atteindre les buts fixés, à savoir un système d'agrafage simple, fiable et garanti, embarqué sur un des bras permettant de lier les fils de palissage, ce système d'agrafage pouvant être commandé par l'opérateur, voire préprogrammé, en fonction de l'avance du tracteur, les moyens de commande des différents actionneurs relevant des pratiques courantes de l'homme du métier.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Machine (1) pour palisser la végétation, notamment les branches des vignes, des framboisiers ou similaires, comportant des moyens de relevage (4) des branches, des moyens d'alimentation (5) de fils de palissage (50) et des moyens de liage (7, 8) desdits fils de palissage, ces moyens de liage comportant deux bras (7, 8) pivotants montés autour d'axes (A) sensiblement verticaux, ces bras étant couplés à des moyens d'entraînement (70, 80) pour être déplacés d'une position d'attente dans laquelle leurs extrémités au moins sont écartées dans une position de travail dans laquelle lesdites extrémités sont rapprochées et agencées pour poser une agrafe (60) sur les fils de palissage (50), **caractérisée en ce qu'**un des bras (7) comporte un magasin d'agrafes (71) embarqué, disposé dans le prolongement d'une tête d'agrafage (72), et **en ce que** l'autre bras (8) comporte une tête d'insertion (82) agencée pour coopérer avec ladite tête d'agrafage (72) quand les bras (7, 8) sont en position de travail pour poser ladite agrafe (60) sur les fils de palissage (50).

2. Machine selon la revendication 1, **caractérisée en ce que** ladite tête d'agrafage (72) comporte une zone de réception (73) d'une agrafe (60) en communication avec ledit magasin d'agrafes (71), suivie d'une zone de pose (74) de ladite agrafe (60), et un couteau (77) aligné avec lesdites zones (73, 74), ce couteau étant couplé à un mécanisme d'actionnement (9) pour être déplacé entre une position passive dans laquelle il est en amont de ladite zone de réception (73) à l'arrière de ladite agrafe (60), et une position active dans laquelle il est au moins partiellement dans la zone de réception (73) pour déplacer ladite agrafe (60) de la zone de réception (73) à la zone de pose (74).

3. Machine selon la revendication 2, **caractérisée en ce que** ledit mécanisme d'actionnement (9) est actionné par le déplacement dudit bras d'agrafage (7).

4. Machine selon la revendication 3, **caractérisée en ce que** ledit mécanisme d'actionnement (9) comporte une crémaillère (90) solidaire dudit couteau (77), engrenant un pignon (91), et une tige d'actionnement (93) liée à l'une de ses extrémités audit pignon (91) en un point (D) excentré par rapport à l'axe de rotation (B) du pignon, et à l'autre extrémité en un point fixe (E) distinct de l'axe de pivotement (A) dudit bras, de sorte que le pivotement du bras (7) génère le déplacement du couteau (77).

5. Machine selon la revendication 2, **caractérisée en ce que** lesdits bras (7, 8) comportent des guides fils (87, 88) agencés pour guider et positionner les fils de palissage (50) par rapport auxdites têtes d'agrafage (72) et d'insertion (82).

6. Machine selon la revendication 2, **caractérisée en ce que** ledit magasin d'agrafes (71) comporte des moyens de poussée (6) desdites agrafes (60) en direction de ladite zone de réception (73), ces moyens de poussée (6) étant agencés pour appliquer sur lesdites agrafes (60) une force de poussée sensiblement constante.

7. Machine selon la revendication 6, **caractérisée en ce que** lesdits moyens de poussée (6) comportent un poussoir (65) logé dans ledit magasin (71) à l'arrière des agrafes (60) et un système de mouflage par poulies (66) et câble (67), une extrémité du câble étant liée audit poussoir (65) et l'autre extrémité du câble portant un contrepoids (68).

## Claims

1. Machine (1) for tying vegetation, in particular vine, raspberry or similar branches, including means (4) for lifting up the branches, means (5) for supplying tying-up wires (50) and means (7, 8) for binding said tying-up wires, these binding means including two pivoting arms (7, 8) mounted around approximately vertical axes (A), these arms being coupled to driving means (70, 80) so as to be moved from a waiting position in which at least their ends are spaced apart to a working position in which said ends are brought together and arranged in order to fit a tie (60) on the tying-up wires (50), **characterized in that** one of the arms (7) comprises an on-board tie magazine (71) arranged in the extension of a tying head (72), and **in that** the other arm (8) includes an insertion head (82) arranged to cooperate with said tying head (72) when the arms (7, 8) are in working position in order to place said tie (60) on the tying-up wires (50).

2. Machine according to claim 1, **characterized in that** said tying head (72) comprises a receiving area (73) for a tie (60) in communication with said tie magazine (71), followed by a fitting area (74) of said tie (60), and a knife (77) aligned with said areas (73, 74), this knife being coupled with an actuating mechanism (9) in order to be moved between a passive position, in which it lies upstream of said receiving area (73) behind said tie (60), and an active position, in which it lies at least partly in the receiving area (73) to move said tie (60) from the receiving area (73) to the fitting area (74).

3. Machine according to claim 2, **characterized in that** said actuating mechanism (9) is actuated by the movement of said tying arm (7).

4. Machine according to claim 3, **characterized in that** said actuating mechanism (9) comprises a rack (90) that is firmly attached to said knife (77), engaging a pinion (91), and an actuating rod (93) connected at one of its ends with said pinion (91) at a point (D) out of center with respect to the axis of rotation (B) of the pinion, and, at the other end, with a fixed point (E) different from the pivoting axis (A) of said arm, so that the pivoting of the arm (7) generates the movement of the knife (77).

5. Machine according to claim 2, **characterized in that** said arms (7, 8) comprise wire guides (87, 88) arranged to guide and position the tying-up wires (50) with respect to said tying (72) and insertion (82) heads.

6. Machine according to claim 2, **characterized in that** said tie magazine (71) comprises pushing means (6) for said ties (60) in direction of said receiving area (73), these pushing means (6) being arranged to apply an approximately constant thrust on said ties (60).

7. Machine according to claim 6, **characterized in that** said pushing means (6) comprise a pusher (65) housed in said magazine (71) behind the ties (60) and a system with pulleys (66) and a cable (67), one end of the cable being fixed on said pusher (65) and the other end of the cable carrying a counterweight (68).

## Patentansprüche

1. Maschine (1) zum Schnüren von Pflanzen, insbesondere für Weinreben, Himbeersträucher oder ähnliche, bestehend aus Mitteln (4) zum Aufrichten der Äste, Mitteln (5) zur Zufuhr der Heftschnüre (50) und Mitteln (7, 8) zum Binden der besagten Heftschnüre, wobei diese Mittel zum Binden zwei auf merklich vertikale Achsen (A) montierte Schwenkarme (7, 8) betragen, wobei diese Arme an Antriebsmittel (70, 80) gekoppelt sind, um von einer Wartestellung in der mindestens ihre Enden voneinander entfernt sind in eine Arbeitsstellung in der die besagten Enden aneinander liegen bewegt zu werden, und ausgelegt sind, um eine Klammer (60) auf die Heftschnüre (50) zu setzen, **dadurch gekennzeichnet, dass** einer der Arme (7) ein in der Verlängerung eines Heftkopfs (72) angeordnetes eingebautes Klammern-Magazin (71) beträgt, und **dadurch**, dass der andere Arm (8) einen Aufsetzkopf (82) beträgt, der ausgelegt ist, um mit dem besagten Heftkopf (72) zusammen zu arbeiten wenn die Arme (7, 8) in Arbeitsstellung sind um die besagte Klammer (60) auf die Heftschnüre (50) zu setzen.

2. Maschine nach Anspruch 1, **dadurch gekennzeichnet, dass** der besagte Heftkopf (72) einen mit dem besagten Klammer-Magazin (71) in Verbindung stehenden Bereich (73) zum Aufnehmen einer Klammer (60) beträgt, gefolgt von einem Bereich (74) zum Aufsetzen der besagten Klammer (60), sowie ein mit den besagten Bereichen (73, 74) fluchtig ausgerichtetes Messer (77), wobei dieses Messer an einen Antriebsmechanismus (9) gekoppelt ist, um zwischen einer passiven Stellung in der es sich hinter dem besagten Aufnahme-Bereich (73), hinter der besagten Klammer (60) befindet und einer aktiven Stellung in der es sich mindestens zum Teil im Aufnahme-Bereich (73) befindet verschoben zu werden um die besagte Klammer (60) von dem Aufnahme-Bereich (73) in den Aufsetz-Bereich (74) zu verschieben.

3. Maschine nach Anspruch 2, **dadurch gekennzeichnet, dass** der besagte Antriebsmechanismus (9) durch die Bewegung des besagten Heftarms (7) angetrieben wird.

4. Maschine nach Anspruch 3, **dadurch gekennzeichnet, dass** der besagte Antriebsmechanismus (9) eine mit dem besagten Messer (77) fest verbundene Zahnstange (90) beträgt, die in ein Ritzel (91) greift, sowie eine Antriebsstange (93), die an einem ihrer Enden mit dem besagten Ritzel (91) an einem in Bezug auf die Drehachse (B) des Ritzels exzentrisch angeordneten Punkt (D) und an dem anderen Ende mit einem von der Drehachse (A) des besagten Arms verschiedenen festen Punkt (E) verbunden ist, so dass das Schwenken des Arms (7) die Verschiebung des Messers (77) erzeugt.

5. Maschine nach Anspruch 2, **dadurch gekennzeichnet, dass** die besagten Arme (7, 8) Schnurführungen (87, 88) betragen, die ausgelegt sind, um die Heftschnüre (50) in Bezug auf die besagten Heft- (72) und Aufsetzköpfe (82) zu führen und zu positionieren.

6. Maschine nach Anspruch 2, **dadurch gekennzeichnet, dass** das besagte Klammer-Magazin (71) Mittel (6) zum Schieben der besagten Klammern (60) in Richtung des besagten Aufnahme-Bereichs (73) beträgt, wobei diese Schiebemittel (6) ausgelegt sind, um eine merklich konstante Schubkraft auf die besagten Klammern (60) auszuüben.

7. Maschine nach Anspruch 6, **dadurch gekennzeichnet, dass** die besagten Schubmittel (6) einen in dem besagten Magazin (71) hinter den Klammern (60) untergebrachten Drücker (65), sowie ein Seiltrieb-System mit Seilscheiben (66) und einem Kabel (67) betragen, wobei ein Ende des Kabels mit dem besagten Drücker (65) verbunden ist und das andere Ende des Kabels ein Gegengewicht (68) trägt.
